# EUROPEAN PATENT SPECIFICATION

(11) **EP 1 234 996 B1**
(45) Date of publication and mention of the grant of the patent: **15.10.2008**
(21) Application number: 02004112.5
(22) Date of filing: 25.02.2002
(51) Int. Cl.: F16D 65/847, F16D 65/097

(54) **Disc brake having a cooling device**
Scheibenbremse mit Kühleinrichtung
Frein à disque avec dispositif de refroidissement

(30) Priority: 26.02.2001 JP 2001050883
(43) Date of publication of application: 28.08.2002
(73) Proprietor: NISSHINBO INDUSTRIES INC., Chuo-ku, Tokyo (JP)
(72) Inventor: Asai, Seiji, Okazaki-shi, Aichi (JP); Matsuishi, Kazuyuki, c/o Nisshinbo Industries, Inc, Nagoya-shi, Aichi (JP)
(74) Representative: Henkel, Feiler & Hänzel

(56) References cited:
- EP-A- 0 501 534
- EP-A- 0 826 894
- FR-A- 2 218 789
- US-A- 4 700 813

## Description

### BACKGROUND OF THE INVENTION

### Field of the Invention

This invention relates to a disc brake which is provided with a device for forcedly diffusing heat generated by a frictional engagement between brake pads and a disc rotor. More specifically, this invention relates to a cooling device of a disc brake for controlling a temperature increase of the disc rotor and surrounding areas thereof.

### Description of Related Art

For example, the below-described floating-caliper type disc brake and opposed-piston type disc brake are known as conventional disc brakes.

These disc brakes very often use an anti-rattle spring made of a sheet metal for suppressing a brake pad vibration by urging brake pads toward a central region of the disc rotor and an anchor shim made of a sheet metal and positioned between the brake pads and a torque-receiving member for maintaining a long-term smooth sliding movement of the brake pads in a rotor axis direction.

An exemplary floating-caliper type disc brake mainly comprises a carrier functioning as a torque-receiving member fixed on a stationary part of a vehicle, a caliper extending over a peripheral surface of the disc rotor so as to cross a rotor in a rotor axis direction, a guiding mechanism for guiding the caliper for sliding movement in or parallel to the rotor axis direction, an actuator being positioned in the caliper at an installation side of the carrier, and a pair of brake pads symmetrically pressing against the rotatable disc rotor connected with a wheel of the vehicle upon actuating the actuator so as to brake the disc rotor.

An exemplary opposed-piston type disc brake mainly comprises a separate type caliper composed of two facing integrated parts extending over and parallelly crossing a peripheral surface of the disc rotor in the rotor axis direction, one of which being fixed on the stationary part of the vehicle, a pair of actuators being positioned in each caliper and facing each other, and a pair of pads symmetrically pressing against the rotatable disc rotor connected with a wheel of the vehicle upon actuating the actuators so as to brake the disc rotor.

The anti-rattle spring extending along the periphery of the disc rotor and covering over the pair of brake pads merely has an opening to allow visual inspection of a state of wear of the friction material on the pads. Further, the anchor shim, positioned between both ends of the pair of the brake pads at the rotor circumferential direction and a supporting part of the torque-receiving member is merely positioned along an inner surface of the supporting part of the torque-receiving member.

Accordingly, in the above-described conventional disc brake, if there is no means to actively remove the heat generated during operation of the brake from a frictional surface of the disc rotor and the surrounding areas thereof, frequent braking on a slope and repeated excessive braking at high speed will cause high temperatures on the frictional surface of the disc rotor. The heat will be transferred by conduction, radiation or convection to the surrounding areas of the disc rotor and will thus cause a high temperature of the entire brake.

The high temperature of the disc brake causes the following problems.

Firstly, when the brake is exposed to the high temperature, a frictional coefficient of the friction material is decreased due to the heat history, thereby causing a brake fade which also possibly degrades the braking efficiency.

Secondly, in case of brake fluid usage, a part of the brake fluid may be evaporated and gasified, thereby causing a vapor lock also possibly degrading the baking efficiency.

Thirdly, a qualitative change of the friction material is effected generally together with wear of the friction material, thereby shortening the life of the friction material.

Fourthly, if a heat spot appears on the friction surface of the disc rotor by the high temperature, the surface of the friction material becomes rough and tends to generate brake noise and brake judder giving a discomforting feeling during braking action to a driver of the vehicle and also shortens the life of the friction material.

Further, the high temperature of the brake may cause degradation of rubber members used for example in a sealing material in the actuator.

In order to control the brake temperature increase, the conventional art commonly uses means described below with some points to be improved.

A first method is to reduce a braking load per unit area by enlarging a rotor diameter or increasing an area of friction material. However, this method is problematic as it can generate undesirable fuel consumption by a weight increase and a cost increase of the brake.

A second method is to actively conduct the running wind in a separately provided ventilation duct. However, this design comes with problems of a difficult layout, a weight increase, and a cost increase of the brake.

This invention is made to mitigate the above-described problems and is to provide a cooling device for a disc brake which is improved with respect to its cooling properties.

EP-A-0826894 discloses a disc brake for a vehicle including a torque-receiving member with supporting parts spaced apart in a circumferential direction of a disc rotor and guiding a pair of facing brake pads adapted to press against the disc rotor from both sides thereof. An anti rattle spring made of a sheet metal and including an opening between elastic arms is supported on the torque-receiving member so as to extend over a peripheral surface of the brake pads and to urge the brake pads toward a central region of the disc rotor to prevent a play and/or coming off of the brake pads.

EP-A-0501534 discloses a disc brake for a vehicle including a caliper and no separate torque-receiving member. An anti rattle spring made of a sheet metal and including an opening defining a pair of spaced apart elastic arms is supported on the caliper.

### SUMMARY AND OBJECT OF THE INVENTION

In order to achieve the above-object, the disc brake of the present invention comprises the features of claim 1. Preferred embodiments of the disc brake are defined in the dependent claims.

The disc brake with the cooling device of this invention has the air guide-member, guiding the running wind or air stream from the outside of the brake to the friction surface of the disc rotor and the surrounding areas thereof, integrally formed in the anchor shim made of the sheet metal, one of the components of this disc brake, positioned between the torque-receiving member and at least one of the brake pads.

The passage is formed on the projecting part of the anchor shim projecting from an edge of the torque-receiving member, the air guide-member is formed on the projecting part of the anchor shim so as to extend in the direction that gradually departs from the external surface of the torque-receiving member toward an outer side of the brake for forming a cooling device by the air guide-member, the external surface of the torque-receiving member and the passage in cooperation for conducting a running wind from an outside of the brake toward frictional surfaces of the disc rotor and the surrounding areas thereof.

The extending part of the anchor shim formed on the projecting part of the anchor shim so as to face a peripheral surface of the disc rotor and protrude in a direction opposite to the extending direction of the air guide-member.

Specifically, the disc brake with the cooling device of this invention has the air guide-member, conducting the running wind or air stream from the outside of the brake to the friction surface of the disc rotor and the surrounding areas thereof, integrally formed in the anti-rattle spring made of the sheet metal, one of the components of this disc brake, urging the pair of brake pads toward the central region of the brake rotor.

The air guide-member of the anti-rattle spring may be integrally formed as a protrusion having the opening at the outer side of the spring in the rotor circumferential direction directed toward the outside of the brake. Also, the air guide-member of the anti-rattle spring is formed as a partially-sheared opening with the section of the sheared member extending at the outer side of the spring in the rotor circumferential direction toward an outside of the brake.

The air guide-members of the anti-rattle spring may be formed to be bilaterally symmetrical relative to a central region of the anti-rattle spring in the rotor circumferential direction.

According to the above-structured cooling device for the disc brake of this invention, without any additional member, the air guide-member formed in the existing anchor shim allows an active and direct air blowing of running wind toward the friction surfaces, a heat source, of the disc rotor and the brake pads and to the surrounding areas thereof with the transferred heat. Therefore, the temperature increase on the friction surface of the disc rotor is controlled, and the air around the disc rotor may be sufficiently ventilated to effectively cool the same.

The air guide-member of the anti-rattle spring and the anchor shim each may be integrally formed by press, thereby facilitating a process of manufacturing and allowing a mass production.

Forming the air guide-member bilaterally symmetrical relative to a center of the anti-rattle spring in the rotor circumferential direction unify a sucking and an exhausting of the running wind in one process, which makes the ventilation more efficient.

This invention may be applied in a type of disc brake employing the anti-rattle spring and the anchor shim as a component, which gives a variety of applicability in various types of disc brakes.

### BRIEF DESCRIPTION OF THE DRAWINGS

Figure 1 is a plan view of a floating-caliper type disc brake with the cooling device for the disc brake according to Examples 1 and 2 of this invention, wherein the right half shows a cross-section view;
Figure 2 is a front view of Figure 1, wherein the right half shows a cross-section view taken along the line II-II;
Figure 3 is a cross-section view of Figure 2 taken along the line III-III;
Figure 4(A) is an isometric view of an anti-rattle spring according to Example 1;
Figure 4(B) is an isometric view of a modified anti-rattle spring according to Example 1;
Figure 5 is an isometric view of an anchor shim according to Example 2 of this invention; and
Figure 6(A) is a cross-section view of the opposed-piston type disc brake with the cooling device according to Example 3, wherein the left half shows a cross-section view; and
Figure 6(B) is a cross-section view of Figure 6(A) taken along B-B.

### PREFERRED EMBODIMENTS OF THE INVENTION

Examples of a cooling device for a disc brake relating to this invention are explained below with reference to the accompanied drawings.

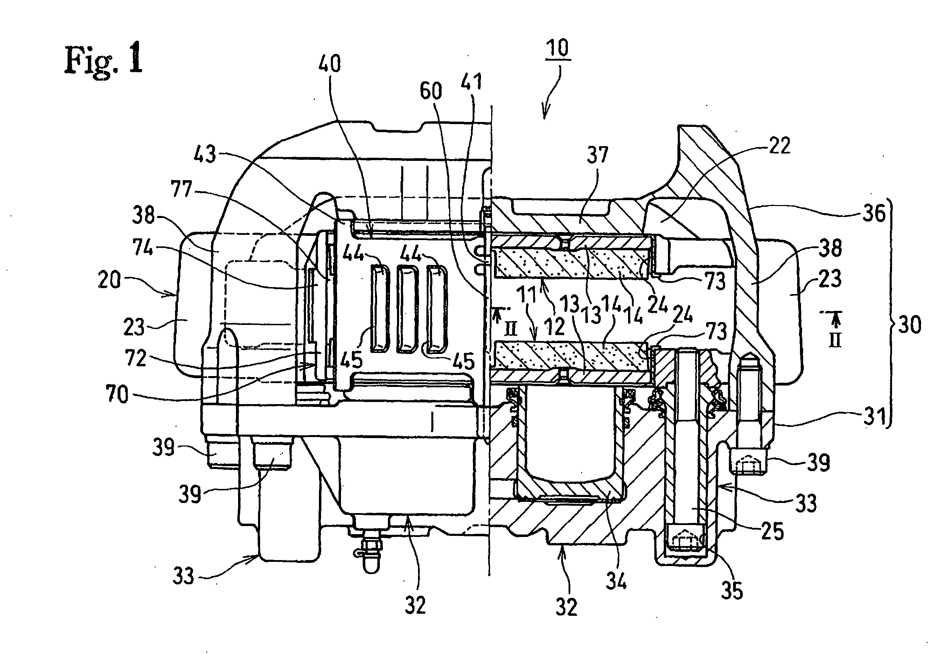

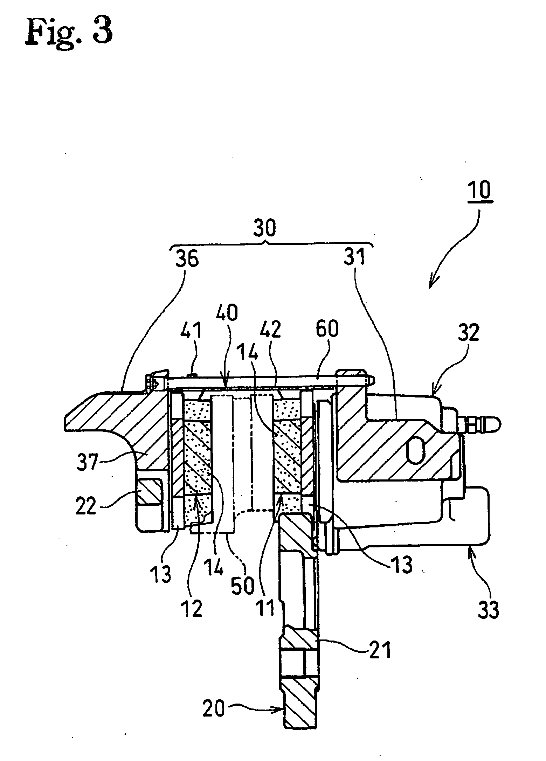

Example 1 employing a cooling device in an anti-rattle spring for a floating-caliper type disc brake is explained with reference to Figures 1-4.

The floating-caliper type disc brake 10, for example, mainly comprises a carrier 20 fixed on a stationary part of a vehicle, a caliper 30 bridging over a periphery of a disc rotor 50, shown in a virtual line, a pair of pin slide mechanisms 33 guiding the caliper 30 in a rotor axis direction, an actuator 32 provided in the caliper 30, and a pair of brake pads 11, 12 frictionally engageable with both sides of the disc rotor 50. The floating-caliper type disc brake 10 often further comprises additional members such as an anti-rattle spring 40 and an anchor shim 70 each made of a sheet metal.

The carrier 20 functioning as a torque-receiving member may comprise a mounting part 21 facing one side surface of the disc rotor 50 rotating together with a wheel to be fixed on the stationary part of the vehicle, a beam 22 facing the mounting part 21 across the disc rotor 50, and a pair of bridges 23 connecting the mounting part 21 and the beam 22 with a distance and crossing a periphery of the disc rotor 50. This example shows a case when the outer and inner bridges 23 sandwich a bridge 38 of the caliper 30 at both sides of the rotor circumferential direction. However, it is well known to take the inner bridge 23 away.

On the bridges 23 at the inner side of the rotor circumferential direction on both sides of the mounting part 21 and the beam 22, L-shaped rails 24 are formed apart from each other in the rotor circumferential direction, and both ends in the rotor circumferential direction of the brake pads 11, 12 are disposed between the facing rails 24 in the both side of the rotor circumferential direction so as to be capable of sliding parallel to the rotor axis and being supported in the rotor circumferential direction.

In this example, a separate type of the caliper 30 is positioned over the periphery of the disc rotor 50 and the pair of brake pads 11, 12.

One caliper member 31 facing one side surface of the disc rotor 50 comprises actuators 32 and a pair of pin slide mechanisms 33 provided outside of the actuators 32, wherein pistons 34 (only one of which is shown in Figure 1) of the actuators 32 abut against a back plate 13 of the inner brake pad 11, and guide pins 25 (only one of which is shown in Figure 1) protruding from the mounting part 21 of the carrier 20 are relatively freely movably fit into blind bores 35 (only one of which is shown in Figure 1) of the pin slide mechanisms 33.

The other caliper member 36 comprises a reaction part 37, facing the actuators 32 and abutting against the back plate 13 of the outer brake pad 12 and the pair of bridges 38 crossing over the periphery of the disc rotor but apart from each other in the rotor circumferential direction, wherein the bridges 38 are designed to be fixed to the one caliper member 31 by four bolts 39 or both caliper members 31, 36 may be designed to be integrated in a known manner.

As is evident from the above-described structure, the caliper 30 of this invention is designed to be freely movably guided in the rotor axis direction relative to the carrier 20.

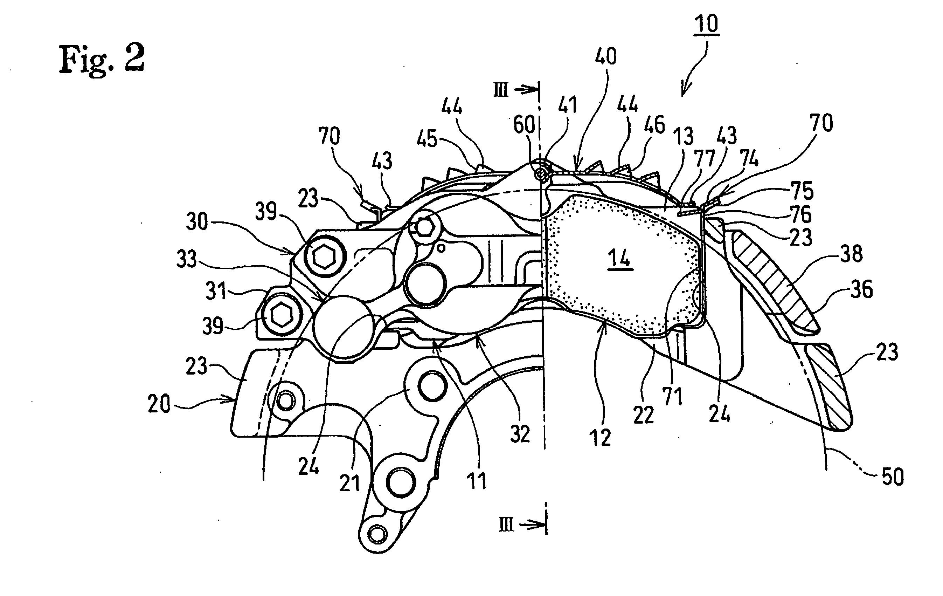

As is shown in the right half cross-section view of the front view of Figure 2, a clearance between the bridge 23 at the outer side of the rotor circumferential direction of the carrier 20 and the bridge 38 of the caliper 30 open from the brake outside to the friction surfaces between the disc rotor 50 and the brake pads 11, 12. Accordingly, the running wind flowing through this opening is directly blown toward the friction surface of the disc rotor 50 and the surrounding areas thereof.

The brake pads 11, 12 each has the back plate 13 with a friction material 14 affixed thereon by means of rivets or other known means.

Both brake pads 11, 12 provided to face each other across the disc rotor 50 are designed such that both ends of the brake pads 11, 12 in the rotor circumferential direction are movably positioned on the L-shaped rails 24; and the brake pads 11, 12 are disengageable from an opening formed by the two bridges 38, the reaction part 37 of the other caliper 36, and the one caliper 31.

However, the position of both brake pads 11, 12 on the carrier 20 is not limited to what is described herein. For example, facing sections between the brake pads 11, 12 and the carrier 20 may be designed to be in a convex-concave-style engagement.

In this case, after removing the guide pin 25 in one of the pair of pin slide mechanisms 33, the pair of brake pads 11, 12 may be disengaged from the brake in a rotor axis direction if the caliper 30 is rotated with the other guide pin 25 as the fulcrum.

An almost rectangular anti-rattle spring 40 made of a sheet metal is positioned over the periphery of the disc rotor 50 so as to cover the pair of brake pads 11, 12. The spring 40 urges the pads 11, 12 to resiliently press them against the rails 24 of the carrier 20 functioning as the torque-receiving member, thereby preventing the rattling of the brake pads 11, 12 and also preventing the dragging of the brake.

The anti-rattle spring 40 of this example has a bridge-shaped support pin penetrating part 41 arranged towards one side in the width direction thereof and at a center in the circumferential direction. A semi-arc-shaped groove 42 is formed over the entire width of the anti-rattle spring 40 in the rotor axis direction at the position of the support pin penetrating part 41. A support pin 60 extending between both calipers 31, 36 penetrates through the support pin penetrating part 41 and engages with the semi-arc-shaped groove 42 of the anti-rattle spring 40, thereby supporting and holding the anti-rattle spring 40 in a hanging manner. Further, both ends 43 of the anti-rattle spring 40 in the rotor circumferential direction resiliently contact the back plates 13 of both brake pads 11, 12, and the anti-rattle spring 40 constantly urges the brake pads 11, 12 toward the central region of the rotor.

The means for urging both brake pads 11, 12 toward the central region of rotor is not limited to the structure described before. For example, both ends of the anti-rattle spring in the rotor circumferential direction may abut against and engage with inner surfaces of the bridges 23 at an inner side of the rotor circumferential direction of the carrier 20 while the central region of the anti-rattle spring in the rotor circumferential direction resiliently contacts an outer surface of the back plates 13 of both brake pads 11, 12.

The anti-rattle spring 40 of this example has an integrally formed ventilator or air guide-member conducting the running wind or air stream from an outside of the brake toward the friction surfaces of the disc rotor 50 and the brake pads 11, 12 and the surrounding areas thereof while the vehicle is running.

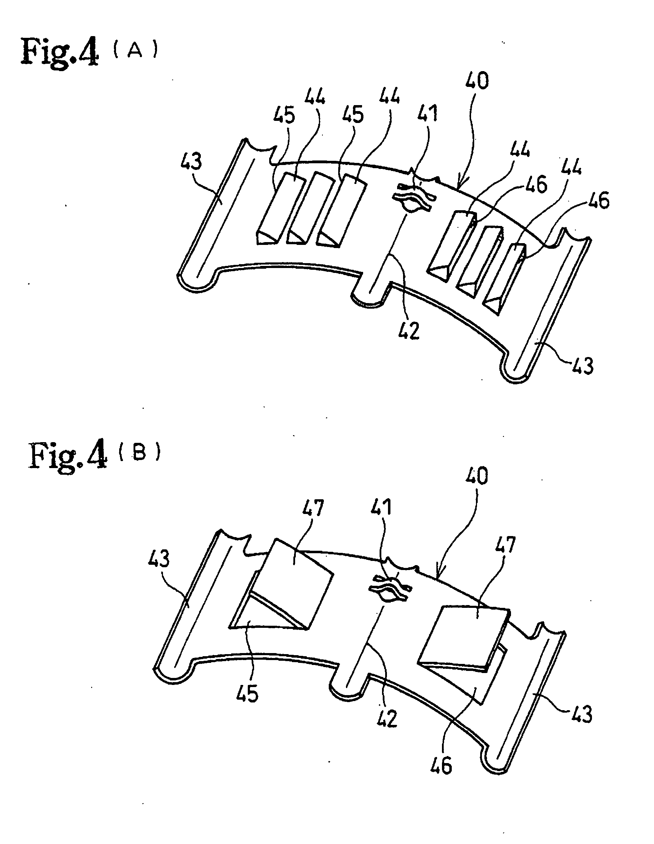

Now, a shape of the ventilator in the anti-rattle spring 40 shown in Figure 4(A) will be explained. A ventilator or air guide-member of this example is integrally formed in the anti-rattle spring 40 in the form of a protrusion 44 having an opening at the outer side of the anti-rattle spring 40 in the rotor circumferential direction directed toward a tangential direction of the circumferential direction of the spring 40 or an outside of the brake when the spring 40 is installed at its position. Following this structure, three air guide-members serving as air intakes 45 directed toward a front of the vehicle are formed. Here again, a shape of the protrusions 44 forming the air intakes and the number of the intakes 45 are not limited to what is described herein. At least, the shape of the air guide-members in the spring 40 is to be selected such that the running wind during running operation of the vehicle in which the disc brake of the invention is applied is effectively conducted toward the friction surface of the disc rotor 50 and the brake pads 11, 12 and the surrounding areas thereof.

The shape of the ventilator or air guide-member shown in Figure 4(B) is a modified example of the above-described intake 45 formed by the protrusion 44, and therefore the reference numbers therein will be assigned to identical parts or structures having the same functions therein. The ventilator or air guide-member of this example is integrally formed into the sheet material of the spring extending in the rotor circumferential direction thereof in that a portion of the spring is partially-sheared and bent towards the outer side as shown in the figure so as to provide an opening and air guide-element extending toward an outside of brake which serves as an air intake 45 directing toward a front of vehicle. Here again, a raising angle of the bent part 47 and the number of ventilators or air guide-members are not limited to what is described herein. At least, the shape of the air guide-members on the spring 40 is to be selected such that the running wind during running operation of the vehicle in which the disc brake of the invention is applied is effectively conducted toward the friction surface of the disc rotor 50 and the brake pads 11, 12 and the surrounding areas thereof.

The running wind may thus actively and directly guided and funneled by the air intakes 45 into the space around the friction surface of the disc rotor 50 and the brake pads 11, 12 and the surrounding areas thereof, thereby realizing a more effective cooling effect than that present in conventional brakes.

In the above-described examples, openings in the anti-rattle spring 40 are formed only at the front side of the vehicle functioning as intakes 45. However, as shown in the figures, an opening may be also formed symmetrically to the center of the anti-rattle spring 40 in the rotor circumferential direction, and the opening may then serve as an outlet 46. Accordingly, the running wind flows towards and into the intake 45, flows into and along the periphery of the disc rotor 50 and the brake pads 11, 12 and is exhausted through the outlet 46. The running wind conducted into the inside of the brake according to this running wind flow stream enables to reduce the temperature increase on the friction surface of the disc rotor 50. Accordingly, the hot or warm air within the brake may be more actively exhausted to the outside of the brake, thereby realizing effective heat dissipation within the brake, i.e., providing more effective cooling of the inside of the brake. Although the above-examples primarily use the running wind, it is obvious that air while keeping the vehicle stopped or parked may also flow to the outside of the brake more easily through the intake 45 and the outlet 46 so that an improved cooling effect is obtained even in these states of non-running of the vehicle. The intake 45 and the outlet 46 may be integrally and simultaneously formed when press-forming or stamping the anti-rattle spring 40, thereby facilitating the process of manufacturing and allowing a mass production at reduced cost.

Example 1 employing a cooling device in an anti-rattle spring for a floating-caliper type disc brake was explained with reference to Figures 1-4.

Example 2 which is an embodiment with a cooling device in accordance with the invention simply uses the floating-caliper type disc brake of Example 1 and explanation is made only as to the additional anchor shim and related parts while the rest of the explanation is omitted.

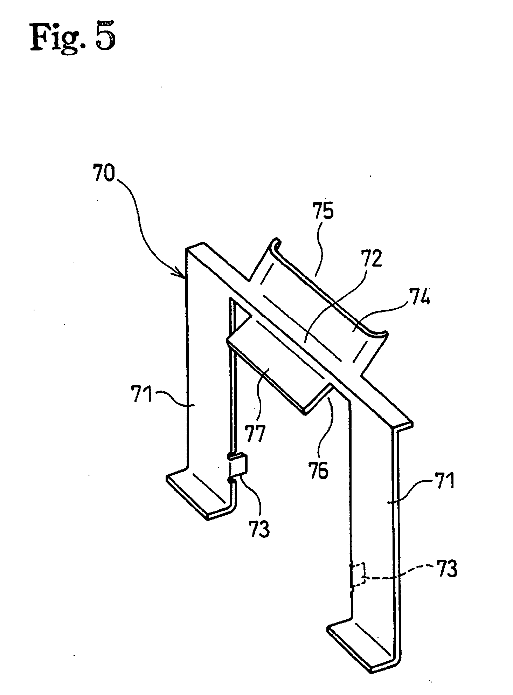

In Example 2 an almost gate-like shaped anchor shim 70 as shown in Fig. 5 is generally made of a rust free or stainless steel metal sheet and is inserted in a sliding part between the brake pads 11, 12 and the carrier 20 as shown in Fig. 1, thereby maintaining a long term smooth slide of the brake pads 11, 12 in the rotor axial direction.

The anchor shim 70 of this example is a type installed in the carrier 20, wherein legs 71 to be placed on the rails 24 away from each other in the rotor axial direction of the carrier 20 are bridged by a connecting part 72. Anti-movement hooks 73, suppressing a movement in the rotor axial direction, are integrally formed on two facing inner sides of the legs 71, 71 by press-bending.

The anchor shim 70 of this example has an integrally formed ventilator or air guide-member conducting the running wind from the outside of the brake toward the friction surfaces of the disc rotor 50 and the brake pads 11, 12 and the surrounding areas thereof while the vehicle is running.

Now, a shape of the ventilator or air guide-member of the anchor shim 70 will be explained. At a central region of an edge of the carrier 20 extending over the periphery of the disc rotor 50 and the brake pads 11, 12, i.e., at a central region of the connecting part 72 projecting from an edge of the inner bridge 23, a ventilator or air guide-member 74 extends in a direction that the ventilator or air guide-member gradually and slantingly protrudes from the external surface of the inner bridge 23 toward the outside of the brake. Both outer ends of the ventilator or air guide-member 74 in the rotor axial direction are bent toward the inner bridge 23 to form a C-like sectional ventilation groove 75 as particularly shown in Fig. 5. Accordingly, the ventilation groove 75, the inner bridge 23 and a passage 76 at a lower side of the connecting part 72 in cooperation form a cooling device, thereby allowing running wind during running operation of the vehicle to be actively and directly conducted to the friction surface of the disc rotor 50 and the brake pads 11, 12 to realize a more effective cooling effect than that present in the conventional device. The ventilation groove 75 and the passage 76 of the anchor shim 70 may be integrally formed by press-forming, thereby facilitating the process of manufacturing and allowing a mass production at reduced cost.

The anchor shim 70 of this example has an extending part 77 formed at a center of the connecting part 72 so as to face the peripheral surfaces of the disc rotor 50 and the brake pads 11, 12 and protruding in a direction opposite to an extending direction of the ventilator or air guide-member 74 at a slightly different angle which provides that the running wind may be conducted to the nearer areas of friction surfaces of the rotor 50 which further improves the cooling effect.

In this example, the anchor shim 70 with the ventilator or air guide-member for the running wind is positioned at both sides in the rotor circumferential direction of the rails 24 of the carrier 20, treating the vehicle front side as an intake for the running wind while treating the vehicle rear side as an outlet of the running wind. However, this invention is not limited to what is described herein, and providing the anchor shim 70 of this invention only at the vehicle front side still allows guiding the running wind along the rotor circumference which realizes the more effective cooling effect than that present in the conventional devices.

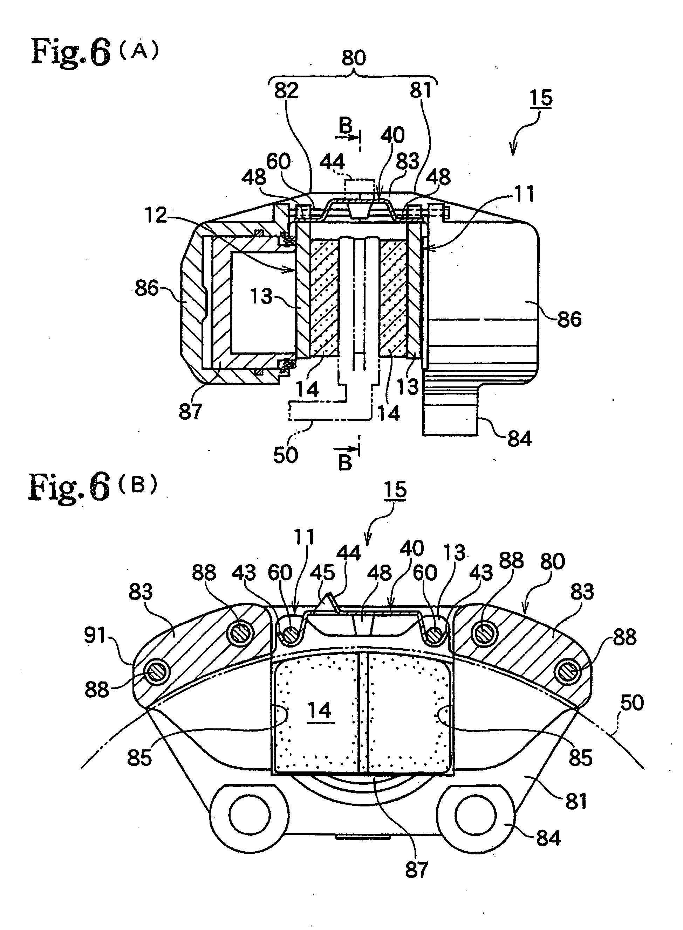

Examples 1 and 2 of this invention show the examples of the cooling device employed in the floating-caliper type disc brake 10. On the other hand, the same type of cooling devices may be employed in the opposed-piston type disc brake 15. Example 3 is explained below with reference to Figure 6, in which the same members or parts with the same functions used in Example 1 are given the same reference numbers.

The opposed-piston type disc brake 15 of this example is of a type where a caliper element 80 extends over a disc rotor 50 and comprises a pair of calipers 81, 82 spaced apart from each other so as to extend downward facing the disc rotor 50 and bridges 83 spaced apart from each other in a rotor circumferential direction and integrating the calipers 81, 82 by four bolts 88 in a C-like shape. The caliper element 80 is positioned over the periphery of the disc rotor 50 such that both side surfaces face the pair of brake pads 11, 12 interposed between the disc rotor and the respective sides of the caliper element 80.

The caliper 81 at an inner brake pad 11 side has a mounting surface 84 for an installation on a stationary portion of the vehicle. Actuators 86 with built in pistons 87 (only an outer pad 12 side of which is shown in the figure) which are adapted to pressingly move both brake pads 11, 12 toward each other are provided at facing parts of both calipers 81, 82, and supporting sections 85 supporting both ends of the brake pads 11, 12 are also provided therein.

Accordingly, the caliper element 80 of this example also has a function to work as a torque-receiving member supporting edges of brake pads 11, 12 in the rotor circumferential direction.

Both brake pads 11, 12 are supported in a hanging manner by two support pins 60 extended between the pair of calipers 81, 82. An almost rectangular anti-rattle spring 40 made of a sheet metal is positioned over the periphery of the disc rotor 50 so as to cover the pair of brake pads 11, 12 and is essentially similar in structure to the spring members 40 described above. Both ends 43 of the spring member 40 in the rotor circumferential direction abut against a lower surfaces of both support pins 60, and tongue pieces 48 extend from both sides at the central region in parallel to the rotor axial direction as shown in Figs. 6(A) and (B).

An air guide-member serving as air intake 45 is formed in the anti-rattle spring 40 in a similar manner as explained in connection with Examples 1 and 2 and the same modifications are applicable here. In the anti-rattle spring 40 shown in the figure and applied in the opposed-piston type disc brake 15 the air guide-member or air intake 45 is formed and positioned so as to conduct the running wind toward the friction surfaces of the disc rotor 50 and brake pads 11, 12 and the surrounding areas over the periphery of the disc rotor 50 and the brake pads 11, 12 to improve the cooling efficiency.

This invention described above however is not limited to Examples 1-3. For example, as a cooling device for a disc brake, any combination of the anti-rattle spring 40 of Example 1 and the anchor shim 70 of Example 2 may be employed. The anchor shim 70 of Example 2 of this invention may be also employed in the opposed-piston type disc brake of Example 3.

The cooling device of this invention may be applied to various types of disc brake as long as they have an anti-rattle spring 40 made of a sheet metal, urging the brake pads 11, 12 toward the rotor center side or an anchor shim 70 made of a sheet metal and inserted between the brake pads 11, 12 and the torque-receiving members 20 or 80 supporting the edges of the brake pads in the rotor circumferential direction.

With the above-described structure, the cooling device for a disc brake and a disc brake with the cooling device of this invention have the following advantages:
Without requiring additional components, the ventilator or air guide-member formed in the existing anti-rattle spring or anchor shim allows an active and direct blowing of running wind toward the friction surfaces of the disc rotor and the brake pads and the surrounding areas thereof. Therefore, the temperature increase on the friction surface of the disc rotor is restricted and the surrounding air thereof may be sufficiently ventilated to effectively cool the same.
Forming the ventilator or air guide-member bilaterally symmetrical relative to a central region of the disc brake in the rotor circumferential direction in the anti-rattle spring or the anchor shim makes the ventilator or air guide-member at or towards the front vehicle side to serve as the intake and the ventilator or air guide-member at or towards the rear vehicle side to an outlet, which creates a simple unidirectional flow of the running wind which further improves the cooling efficiency.
The above-cooling effect solves various problems caused by the high brake temperatures during operation in the conventional brakes.
The ventilator or air guide-member of the anti-rattle spring and the anchor shim each may be integrally formed by press-forming or stamping, thereby facilitating the process of manufacturing and allowing a mass production.

## Claims

1. A disc brake having a cooling device for a vehicle including:
a torque-receiving member (20) having supporting parts (24) positioned spaced apart in a circumferential direction of a disc rotor (50),
a pair of facing brake pads (11,12), for braking the disc rotor (50) by pressing against the disc rotor (50) from both sides thereof, the brake pads (11,12) being guided on the supporting parts (24) of the torque-receiving member (20) so as to be movable in an axial direction of the disc rotor (50), and
an anchor shim (70) positioned between the torque-receiving member (20) and at least one of the brake pads (11,12),
**characterized in that**
a passage (76) is formed on a projecting part of the anchor shim (70) projecting from an edge of the torque-receiving member (20), and
an air guide-member (74,75) is formed on the projecting part of the anchor shim (70) so as to extend in a direction that gradually departs from an external surface of the torque-receiving member (20) toward an outer side of the brake, wherein the air guide-member (74,75) and the external surface of the torque-receiving member (20) and the passage (76) cooperate so as to guide a running wind or an air stream from an outside of the brake toward frictional surfaces of the disc rotor (50) and surrounding areas thereof.

2. The disc brake of claim 1, wherein an extending part (77) is formed on the projecting part of the anchor shim (70) so as to face a peripheral surface of the disc rotor (50) and protrude in a direction opposite to an extending direction of the air guide-member (74,75).

3. The disc brake of claim 1 or 2, further comprising
an anti-rattle spring (40) made of a sheet metal for urging at least one of the pair of brake pads (11,12) toward a central region of the disc rotor (50) and positioned so as to extend over a peripheral surface of the pair of brake pads (11,12), and
at least one air guide-member (44,45;45,47) integrally formed in the anti-rattle spring (40) and comprised of an opening (45) and an air guide element (44;47) provided so as to guide a running wind or an air stream from outside of the brake toward frictional surfaces of the disc rotor (50) and surrounding areas thereof.

4. The disc brake of claim 3, wherein the air guide-member of the anti-rattle spring (40) is formed as a protrusion (44) with the opening (45) at an outer side of the anti-rattle spring (40) in the circumferential direction of the disc rotor (50) directed toward an outside of the brake so as to serve as the air guide element.

5. The disc brake of claim 3, wherein the air guide-member of the anti-rattle spring (40) is formed as a partially-sheared opening (45) with a section of the sheared member (47) extending at an outer side of the anti-rattle spring (40) in the circumferential direction of the disc rotor (50) toward an outside of the brake so as to serve as the air guide element.

6. The disc brake of any one of claims 3 to 5, wherein plural air guide-members (44,45;45,47) of the anti-rattle spring (40) are formed to be bilaterally symmetrical relative to a central region of the anti-rattle spring (40) in the circumferential direction of the disc rotor (50).

## Patentansprüche

1. Scheibenbremse mit einer Kühleinrichtung für ein Fahrzeug, mit:
einem Bremsmoment-Aufnahmeelement (20) mit Halteteilen (24), die voneinander in einer Umfangsrichtung eines Scheibenrotors (50) beabstandet positioniert sind,
einem Paar einander zugewandter Bremsbeläge (11,12) zum Bremsen des Scheibenrotors (50) durch Drücken gegen den Scheibenrotor (50) von beiden Seiten desselben, wobei die Bremsbeläge (11,12) auf den Halteteilen (24) des Bremsmoment-Aufnahmeelements (20) so geführt sind, dass sie einer Axialrichtung des Scheibenrotors (50) beweglich sind, und
einem Ankerblech (70), das zwischen dem Bremsmoment-Aufnahmeelement (20) und mindestens einem der Bremsbeläge (11,12) positioniert ist,
**dadurch gekennzeichnet, dass**
ein Durchgang (76) auf einem Vorsprungsteil des Ankerblechs (70) ausgebildet ist, das von einem Rand des Bremsmoment-Aufnahmeelements (20) vorsteht, und
ein Luftleitelement (74,75) auf dem Vorsprungsteil des Ankerblechs (70) so ausgebildet ist, dass es sich in einer Richtung erstreckt, die sich allmählich von einer Außenfläche des Bremsmoment-Aufnahmeelements (20) zu einer Außenseite der Bremse hin entfernt, wobei das Luftleitelement (74,75) und die externe Oberfläche des Bremsmoment-Aufnahmeelements (20) und der Durchgang (76) so zusammenwirken, dass ein Fahrtwind oder ein Luftstrom von einer Außenseite der Bremse zu Reibungsoberflächen des Scheibenrotors (50) und umgebende Bereiche geleitet wird.

2. Die Scheibenbremse gemäß Anspruch 1, wobei ein Verlängerungsteil (77) an dem Vorsprungsteil des Ankerblechs (70) so ausgebildet ist, dass es einer Umfangsfläche des Scheibenrotors (50) zugewandt ist und in einer Richtung gegenüber einer Erstreckungsrichtung des Luftleitelements (74,75) vorsteht.

3. Die Scheibenbremse gemäß Anspruch 1 oder 2, ferner mit
einer Anti-Klapperfeder (40) aus einem Blattmetall zum Drängen mindestens eines aus dem Paar von Bremsbelägen (11,12) zu einem zentralen Bereich des Scheibenrotors (50) und die so positioniert ist, dass sie sich über eine Umfangsfläche des Paars der Bremsbeläge (11,12) erstreckt, und
mindestens einem Luftleitelement (44,45;45,47), das integral in der Anti-Klapperfeder (40) ausgebildet ist und eine Öffnung (45) sowie ein Luftleitteil (44;47) umfasst, das so vorgesehen ist, dass es einen Fahrtwind oder einen Luftstrom von der Außenseite der Bremse zu Reibungsflächen des Scheibenrotors (50) und umgebende Bereiche leitet.

4. Die Scheibenbremse gemäß Anspruch 3, wobei das Luftleitelement der Anti-Klapperfeder (40) als ein Vorsprung (44) mit der Öffnung (45) an einer Außenseite der Anti-Klapperfeder (40) in der Umfangsrichtung des Scheibenrotors (50) ausgebildet ist und zwar gerichtet zu einer Außenseite der Bremse, derart, dass es als das Luftleitteil dient.

5. Die Scheibenbremse gemäß Anspruch 3, wobei das Luftleitelement der Anti-Klapperfeder (40) als eine teilweise abgescherte Öffnung (45) ausgebildet ist, wobei sich ein Abschnitt des abgescherten Teils (47) an einer Außenseite der Anti-Klapperfeder (40) in der Umfangsrichtung des Scheibenrotors (50) zu einer Außenseite der Bremse erstreckt derart, dass es als das Luftleitteil dient.

6. Die Scheibenbremse gemäß einem der Ansprüche 3 bis 5, wobei mehrere Luftleitelemente (44,45;45,47) der Anti-Klapperfeder (40) zweiseitig symmetrisch relativ zu einem Mittelbereich der Anti-Klapperfeder (40) in der Umfangsrichtung des Scheibenrotors (50) ausgebildet sind.

## Revendications

1. Frein à disque ayant un dispositif de refroidissement pour un véhicule et comprenant :
- un élément ( 20 ) recevant le couple et ayant des parties ( 24 ) de support placées à distance dans une direction circonférentielle d'un rotor ( 50 ) de disque,
- une paire de plaquettes ( 11, 12 ) de frein se faisant face pour freiner le rotor ( 50 ) de disque en s'appliquant sur le rotor ( 50 ) de disque des deux côtés, les plaquettes ( 11, 12 ) de frein étant guidées sur les parties ( 24 ) de support de l'élément ( 20 ) recevant le couple, de manière à être mobiles dans une direction axiale du rotor ( 50 ) de disque, et
- une cale ( 70 ) formant ancre placée entre l'élément ( 20 ) recevant le couple et au moins l'une des plaquettes ( 11, 12 ) de frein,
**caractérisé en ce que**
un passage ( 76 ) est formé sur une partie en saillie de la cale ( 70 ) formant ancre, faisant saillie d'un bord de l'élément ( 20 ) recevant le couple, et
un élément ( 74, 75 ) de guidage d'air est formé sur la partie en saillie de la cale ( 70 ) formant ancre, de manière à s'étendre dans une direction qui s'écarte progressivement d'une surface extérieure de l'élément ( 20 ) recevant un couple vers un côté extérieur du frein, l'élément ( 74, 75 ) de guidage d'air et la surface extérieure de l'élément ( 20 ) recevant un couple et le passage ( 76 ) coopérant pour guider un vent passant ou un courant d'air provenant de l'extérieur du frein vers des surfaces de friction du rotor ( 50 ) du disque et des zones qui l'entourent.

2. Frein à disque suivant la revendication 1, dans lequel une partie ( 77 ) d'extension est formée sur la partie en saillie de la cale ( 70 ) formant ancre, de manière à faire face à une surface périphérique du rotor ( 50 ) du disque et à faire saillie dans une direction opposée à une direction d'extension de l'élément ( 74, 75 ) de guidage de l'air.

3. Frein à disque suivant la revendication 1 ou 2, comprenant en outre
un ressort ( 40 ) anti-cliquetis en un métal en feuille pour repousser au moins une plaquette de la paire de plaquettes ( 11, 12 ) de frein vers une région centrale du rotor ( 50 ) du disque et placé de manière à s'étendre sur une surface périphérique de la paire de plaquettes ( 11, 12 ) de frein, et
au moins un élément ( 44, 45 ; 45, 47 ) de guidage d'air, faisant partie intégrante du ressort ( 40 ) anti-cliquetis et constitué d'une ouverture ( 45 ) et d'un élément ( 44 ; 47 ) de guidage d'air conçu pour guider un vent passant ou un courant d'air de l'extérieur du frein vers les surfaces de friction du rotor ( 50 ) du disque et vers les zones qui l'entourent.

4. Frein à disque suivant la revendication 3, dans lequel l'élément de guidage d'air du ressort ( 40 ) anti-cliquetis est sous la forme d'une saillie ( 44 ) ayant l'ouverture ( 45 ) sur un côté extérieur du ressort ( 40 ) anti-cliquetis dans la direction circonférentielle du rotor ( 50 ) du disque dirigée vers l'extérieur du frein de manière à servir d'élément de guidage d'air.

5. Frein à disque suivant la revendication 3, dans lequel l'élément de guidage d'air du ressort ( 40 ) anti-cliquetis est sous la forme d'une ouverture ( 45 ) cisaillée avec une section de l'élément ( 47 ) cisaillé s'étendant sur un côté extérieur du ressort ( 40 ) anti-cliquetis dans la direction circonférentielle du rotor ( 50 ) de disque vers l'extérieur du frein, de manière à servir d'élément de guidage d'air.

6. Frein à disque suivant l'une quelconque des revendications 3 à 5, dans lequel plusieurs éléments ( 44, 45 ; 45, 47 ) de guidage d'air du ressort ( 40 ) anti-cliquetis sont formés de manière à être symétriques bilatéralement par rapport à une région centrale du ressort ( 40 ) anti-cliquetis dans la direction circonférentielle du rotor ( 50 ) de disque.
